# EUROPEAN PATENT SPECIFICATION

(11) **EP 4 077 580 B1**
(45) Date of publication and mention of the grant of the patent: **06.12.2023**
(21) Application number: 20841762.6
(22) Date of filing: 16.12.2020
(51) Int. Cl.: C09K 5/04, F25B 7/00, F25B 9/00

(54) **REFRIGERANT**
KÄLTEMITTEL
RÉFRIGÉRANT

(30) Priority: 16.12.2019 IT 201900024174; 23.04.2020 IT 202000008800
(43) Date of publication of application: 26.10.2022
(73) Proprietor: Angelantoni Test Technologies S.R.L., in short ATT S.R.L., 06056 Massa Martana (PG) (IT)
(72) Inventor: PARRABBI, Patrizio, 06056 Massa Martana (PG) (IT); CAPODAGLIO, Filippo, 06056 Massa Martana (PG) (IT); CATANZANI, Lorenzo, 06056 Massa Martana (PG) (IT)
(74) Representative: Ercolani, Simone Pietro
(86) International application number: PCT/IB2020/062008
(87) International publication number: WO 2021/124135

(56) References cited:
- WO-A1-00/66678
- WO-A1-96/02606
- WO-A1-2020/035689
- DE-A1-102017 216 361
- US-A1- 2019 093 926

## Description

### FIELD OF THE INVENTION

The present invention relates to a refrigerant. In particular, such refrigerant is used in cooling devices operating in environmentally controlled test chambers. Such test chambers have an insulated space within which it is possible to insert a mechanical body to be tested under various conditions of temperature, humidity and pressure. Within such insulated space, it is often necessary to reach extremely low temperatures, even below minus 60°C (or -60°C or even 213.15 K).

### KNOWN PRIOR ART

It is known that, according to legislative provisions, a refrigerant must not contribute significantly to either the expansion of the hole in the ozone layer in the atmosphere or to the global warming. Therefore, it is no longer possible to use halogenated compounds, in particular fluorinated gases or chlorinated substances, as refrigerants. In addition, the refrigerant used in the cooling devices must be non-flammable, so as to make filling, shipping and operating the test chamber easier and safer, in light of safety rules, which may have to be observed. Moreover, the production of a circuit within which the refrigerant flows, inside a refrigeration device, becomes more expensive when a flammable refrigerant is used, due to technical expedients required in that case. In this context, flammability means that the refrigerant reacts with the ambient oxygen, producing heat. A refrigerant is flammable, in particular, if it falls within the fire class A2L, A2 and A3 C in accordance with EN378 or Din 378 regulation.

Furthermore, a refrigerant should have a relatively low CO₂ equivalent. Basically, its relative global warming potential (or also known in English as "Global Warming Power" or "GWP") should be as low as possible, so as to avoid indirect damage to the environment in the event the refrigerant is released. The GWP measures the defined amount of mass of a greenhouse gas that contributes to global warming. Such value is established by considering carbon dioxide as a reference, which therefore acts as a reference value. The GWP thus describes the effect of average heating over a specific time interval, 100 years in this context, of a given gas or gas mixture. As regards the definition of the CO₂ equivalent or its respective GWPs, reference will be made herein and hereinafter to (EU) Regulation No. 517/2014 of the European Parliament and Council.

In light of the above-mentioned considerations, refrigerants have been developed, which have low GWP and which are not flammable in any case.

In this regard, refrigerants are known, among others, which adopt a mixture comprising carbon dioxide, 1,1,1,2-tetrafluoroethane (or also known as R134a) and difluoromethane (or also known as R32).

In particular, the document WO9602606A1 in the name of Imperial Chemical Industries PLC, according to a first embodiment, describes a mixture that contains a weight percent from 2 to 15% of carbon dioxide in relation to the total mixture, from 30 to 96% of R134a, and from 2 to 55% of R32. According to a further embodiment of the same patent, the mixture contains a weight percent from 1 to 20% of CO₂ in relation to the total mixture, from 5 to 60% of R134a, and from 30 to 90% of R32. Also the document WO00/66678 in the name of Clodic Devis et al. describes a mixture comprising carbon dioxide, R134a and R32. However, in such patent, the cooling mixture contains a mass percentage from 3 to 7% of carbon dioxide in relation to the total mixture, from 65 to 75% of R134a and from 15 to 25% of R32.

Furthermore, the document JPH06867870 in the name of Daikin Industries LTD describes a refrigerant consisting of a mixture which comprises CO₂, R134a and R32 in the following mass percentages in relation to the total: from 1 to 3% of carbon dioxide, from 25 to 35% of R32 and from 74 to 62% of R134a.

Finally, the document JPH06220435 in the name of SHOWA DENKO KK describes a further refrigerant, which comprises carbon dioxide, R32 and R134a. In one of the embodiments described in the above-mentioned Japanese document, R32, R134a and carbon dioxide have mass percentages in relation to the total mixture, respectively, of 5.70%, 89.47%, and 4.82%.

Document WO2020/035689 in the name of MEXICHEN FLUOR SA DE CV discloses a refrigerant composition comprising carbon dioxide (CO2; R-744) and from 1 to 32 weight % difluoromethane (R-32) based on the total weight of the composition. The above-mentioned mixtures, although capable of operating in conventional refrigeration devices, have an extremely low GWP and are not flammable, however they are not able to reach, within the insulated space of the test chamber where the component to be tested is placed, temperatures below minus 50°C (or -50°C or even 223.15 K).

There are also different mixtures of refrigerants, consisting of carbon dioxide and pentafluoroethane (R125). For example, the application US2019/0093926 in the name of WEISS UMWELTTECHNIK GMBH describes just a refrigerant consisting of carbon dioxide and pentafluoroethane (R125), in which the mass fraction of carbon dioxide is between 20 and 80%. Such a solution, however, not only can technically not reach a temperature lower than minus 57°C (or -57°C or even 216.15 K), but has a high GWP. In addition, a mixture of this kind, in the event of extremely low temperatures' request, risks freezing within the refrigeration device circuit, thus resulting in huge problems to the entire environmentally controlled test chamber in which the refrigeration device is installed.

Therefore, object of the present invention is to make a refrigerant which contains in particular carbon dioxide and is able to reach temperatures well below minus 57°C (or -57°C or even 216.15 K) inside an environmentally controlled chamber.

Further object of the present invention is to make a cooling mixture, which is not flammable and has a GWP value as low as possible.

Still, it is an object of the present invention to identify a refrigerant that is capable of replacing the R23 gas, which up to now has been used in the cooling devices present in the environmentally controlled test chambers where it is desired to reach temperatures lower than minus 55°C and which at the same time features a very low GWP.

Finally, it is an object of the present invention to make a refrigerant that can circulate also in the refrigeration devices used in the environmentally controlled test chambers already existing, without the need for the refrigeration devices installed therein to be modified.

### SUMMARY OF THE INVENTION

These and other objects are achieved by a refrigerant for a refrigeration device, comprising a gas mixture, said gas mixture comprising at least carbon dioxide, 1,1,1,2-tetrafluoroethane and difluoromethane, characterised in that carbon dioxide is present in a mass percentage higher than 50% in relation to the total mixture.

Such a cooling mixture has proven capable of making the insulated region of an environmentally controlled chamber work even at temperatures well below minus 57°C. Moreover, such a refrigerant has a very low GWP and is not flammable. Basically, a mixture of this kind, overcoming a technological prejudice according to which mass percentages of carbon dioxide higher than 50% *in relation to the total* mixture of refrigerant gas could be harmful for operating the cooling device within which it circulates, has proven capable of successfully replacing refrigerant gases that are harmful to the environment or even those that are not harmful to the environment, but in any case which are not able to reach extremely low temperatures, even below minus 57°C (or -57°C or even 216.15 K).

Specifically, carbon dioxide has a mass percentage between 50% and 75% of the total mixture. In particular, carbon dioxide has a mass percentage between 67% and 70% in relation to the total mixture, preferably 69%.

Furthermore, 1,1,1,2-tetrafluoroethane (R134a) has a mass percentage between 12.5% and 22% of the total mixture, preferably 19%.

Advantageously, difluoromethane has a mass percentage between 9% and 19% of the total mixture, preferably 12%.

The final mixture has proven surprisingly capable of lowering the freezing temperature of the final mixture and at the same time to counter the flammability of the final mixture.

In particular, the mass percentage of carbon dioxide, 1,1,1,2-tetrafluoroethane and difluoromethane is such as to make said mixture non-flammable.

Furthermore, the invention provides a refrigeration apparatus equipped with a refrigeration device having a closed circuit within which a refrigerant circulates; said closed circuit is equipped with at least one compressor, cooling means for said refrigerant, expansion means for said refrigerant and at least one evaporator, characterised in that a refrigerant according to one or more of claims 1 to 6 circulates within said closed circuit.

Furthermore, such apparatus comprises a second refrigeration device having a second closed circuit within which a second refrigerant circulates, said second closed circuit is equipped with at least one second compressor, second cooling means for said second refrigerant, second expansion means for said second refrigerant and at least one second evaporator, wherein said at least one second evaporator is used for cooling the refrigerant circulating within said cooling means of said closed circuit, and wherein said second refrigerant is distinct from said refrigerant. In particular, preferably, said second refrigerant comprises R404A, or R449A, or R452A, or other refrigerant having similar thermodynamic properties, in particular capable of condensing at a temperature close to ambient temperature.

Finally, an environmentally controlled test chamber is also provided, having an insulated space within which a specimen to be tested is inserted and comprising a refrigeration apparatus according to one or more of claims 7 to 9.

### DESCRIPTION OF THE FIGURES

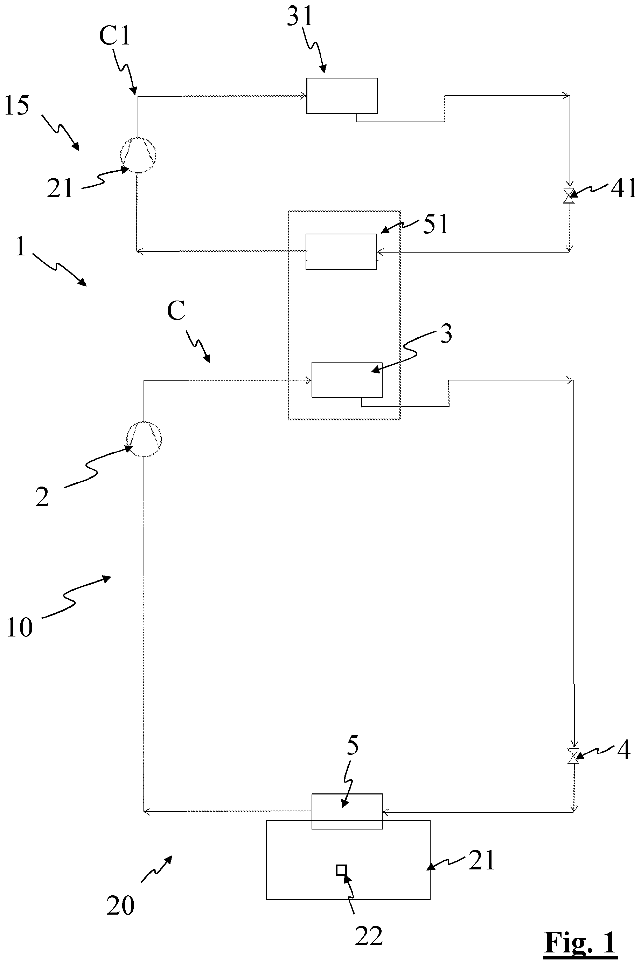

Some particular embodiments of the present invention will now be described by way of non-limiting example with reference to the accompanying figure 1, which shows a schematic view of the refrigeration apparatus of an environmentally controlled test chamber equipped inside of it with an insulated space within which a test specimen is arranged.

### DETAILED DESCRIPTION OF A PREFERRED EMBODIMENT OF THE PRESENT INVENTION

Figure 1 shows, in a simplified manner, a refrigeration apparatus 1 equipped with a refrigeration device 10 having a closed circuit C within which a flow rate of refrigerant circulates. The closed circuit C comprises a main compressor 2, at least one cooling device 3 for the refrigerant (in the case of phase change of the refrigerant, also known as a condenser), expansion means 4 of the refrigerant and an evaporator 5. The expansion means 4, which in the particular case comprise an expansion valve of the thermostatic type, in other embodiments may comprise a capillary line or other mechanism, without thereby departing from the scope of protection of the present invention.

The apparatus 1 further comprises a second refrigeration device 15 having a second closed circuit C1 within which a second refrigerant circulates. Such second closed circuit C1 is equipped with a second compressor 21, second cooling means 31 for the second refrigerant, second expansion means 41 for the second refrigerant and a second evaporator 51. According to the embodiment described herein, the second evaporator 51 is used for cooling and/or condensing the refrigerant circulating within the cooling means 3 of the closed circuit C of the refrigeration device 10. Basically, the apparatus 1 comprises two refrigeration devices 10 and 15, which are cascaded.

Such refrigeration apparatus 1 is used in an environmentally controlled test (or trial) chamber 20 of the known type and is not described further herein, nor shown in detail in the accompanying figure. Such chamber 20 is equipped with an insulated space 21 where a mechanical specimen 22 to be tested under different environmental conditions, is placed.

Advantageously, the second refrigerant is distinct from the refrigerant that circulates in the closed circuit C of the refrigeration device 10 and, preferably, comprises R404A. As an alternative to R404A, such second refrigerant may also comprise R449A, or R452A, or other refrigerant having similar thermodynamic properties.

The refrigerant according to the invention, which instead operates in the refrigeration device 10 within the closed circuit C, comprises a gas mixture. Such gas mixture comprises at least carbon dioxide, 1,1,1,2-tetrafluoroethane and difluoromethane, wherein the carbon dioxide has a mass percentage higher than 50% of the total mixture. In particular, according to the embodiment described herein, carbon dioxide has a mass percentage of 69% in relation to the total mixture. In any case, a refrigerant having a mass percentage between 50% and 75% of the total mixture and, preferably, between 67% and 70% of the total mixture, would still fall within the scope of protection of the present invention.

According to the invention, 1,1,1,2-tetrafluoroethane (or R134a) has a mass percentage of 19%, however in another embodiment the mass percentage of 1,1,1,2-tetrafluoroethane can be between 12.5% and 22% of the total mixture, without thereby departing from the scope of protection of the present invention.

Furthermore, difluoromethane (or R32) has a mass percentage of 12% in relation to the total mixture. A mass percentage of the difluoromethane between 9% and 19% of the mixture would however fall within the scope of protection of the present invention. Basically, therefore, according to the preferred embodiment described herein, the cooling mixture object of the invention comprises carbon dioxide having a mass fraction of 69% in relation to the total mixture, 1,1,1,2-tetrafluoroethane (or R134a) having a mass percentage of 19% in relation to the total mixture, and difluoromethane (or R32) having a mass percentage of 12% in relation to the total mixture.

Such a composition has proven to be non-flammable.

The holder has also experienced that such a refrigerant composition is capable of reaching a temperature well below -57°C (or even 216.15 K), even down to about - 78°C (or even 195.15 K) within the insulated space 21 of the environmentally controlled chamber 20. Moreover, the refrigerant thus obtained has a very low GWP value, i.e. less than 380 over 100 years. Finally, such refrigerant does not contribute to the expansion of the greenhouse effect.

## Claims

1. Refrigerant for a refrigeration device (10) comprising a gas mixture, said gas mixture comprising at least carbon dioxide, 1,1,1,2-tetrafluoroethane and difluoromethane, wherein carbon dioxide has a mass percentage higher than 50% in relation to the total mixture, **characterised in that** carbon dioxide has a mass percentage between 50% and 75% of the mixture.

2. Refrigerant according to claim 1, **characterised in that** carbon dioxide has a mass percentage between 67% and 70% in relation to the total mixture, preferably 69%.

3. Refrigerant according to claim 1 or 2, **characterised in that** 1,1,1,2-tetrafluoroethane has a mass percentage between 12.5% and 22% in relation to the total mixture, preferably 19%.

4. Refrigerant according to one or more of claims 1 to 3, **characterised in that** difluoromethane has a mass percentage between 9% and 19% of the total mixture, preferably 12%.

5. Refrigerant according to one or more of claims 1 to 4, **characterised in that** the mass percentage of carbon dioxide, 1,1,1,2-tetrafluoroethane and difluoromethane is such as to make said mixture non-flammable.

6. Refrigeration apparatus (1) equipped with a refrigeration device (10) having a closed circuit (C) within which a refrigerant circulates, said closed circuit (C) being equipped with at least one compressor (2), cooling means (3) for said refrigerant, expansion means (4) for said refrigerant and at least one evaporator (5), **characterised in that** a refrigerant according to one or more of claims 1 to 5 circulates within said closed circuit (C).

7. Apparatus (1) according to claim 6, **characterised by** comprising a second refrigeration device (15) having a second closed circuit (C1) within which a second refrigerant circulates, said second closed circuit (C1) being equipped with at least one second compressor (21), second cooling means (31) for said second refrigerant, second expansion means (41) for said second refrigerant and at least one second evaporator (51), wherein said at least one second evaporator is used for cooling the refrigerant circulating within said cooling means (3) of said closed circuit (C), and wherein said second refrigerant is distinct from said refrigerant.

8. Apparatus according to claim 7, **characterised in that** said second refrigerant comprises R404A, or R449A, or R452A, or other refrigerant having similar thermodynamic properties.

9. Environmentally controlled test chamber (20) having an insulated space (21) within which a specimen (22) to be tested is inserted and comprising a refrigeration apparatus (1) according to one or more of claims 6 to 8.

## Patentansprüche

1. Kältemittel für ein Kühlgerät (10), umfassend eine Gasmischung, wobei das Gasmischung mindestens Kohlendioxid, 1,1,1,2-Tetrafluorethan und Difluormethan umfasst, wobei Kohlendioxid einen Massenanteil von mehr als 50 % im Verhältnis zu der Gesamtmischung aufweist, **dadurch gekennzeichnet, dass** Kohlendioxid einen Massenanteil zwischen 50 % und 75 % der Mischung aufweist.

2. Kältemittel nach Anspruch 1, **dadurch gekennzeichnet, dass** Kohlendioxid einen Massenanteil zwischen 67 % und 70 % bezogen auf die Gesamtmischung, vorzugsweise 69 %, aufweist.

3. Kältemittel nach Anspruch 1 oder 2, **dadurch gekennzeichnet, dass** 1,1,1,2-Tetrafluorethan einen Massenanteil zwischen 12,5 % und 22 % bezogen auf die Gesamtmischung, vorzugsweise 19 %, aufweist.

4. Kältemittel nach einem oder mehreren der Ansprüche 1 bis 3, **dadurch gekennzeichnet, dass** Difluormethan einen Massenanteil zwischen 9 % und 19 % der Gesamtmischung, vorzugsweise 12 %, aufweist.

5. Kältemittel nach einem oder mehreren der Ansprüche 1 bis 4, **dadurch gekennzeichnet, dass** der Massenanteil an Kohlendioxid, 1,1,1,2-Tetrafluorethan und Difluormethan so bemessen ist, dass die Mischung nicht brennbar ist.

6. Kühlgerät (1), ausgestattet mit einem Kühlgerät (10), das einen geschlossenen Kreislauf (C) aufweist, in dem ein Kältemittel zirkuliert, wobei der geschlossene Kreislauf (C) mit mindestens einem Kompressor (2), Kühlmitteln (3) für das Kältemittel, Expansionsmittel (4) für das Kältemittel und mindestens einen Verdampfer (5) ausgestattet ist, **dadurch gekennzeichnet, dass** ein Kältemittel nach einem oder mehreren der Ansprüche 1 bis 5 im geschlossenen Kreislauf (C) zirkuliert.

7. Vorrichtung (1) nach Anspruch 6, **dadurch gekennzeichnet, dass** sie eine zweite Kühlvorrichtung (15) mit einem zweiten geschlossenen Kreislauf (C1) umfasst, in dem ein zweites Kältemittel zirkuliert, wobei der zweite geschlossene Kreislauf (C1) mit mindestens einem zweiten Kompressor (21), zweiten Kühlmitteln (31) für das zweite Kältemittel, zweiten Expansionsmittel (41) für das zweite Kältemittel und mindestens einem zweiten Verdampfer (51) ausgestattet ist, wobei der mindestens eine zweite Verdampfer zum Kühlen des Kältemittel verwendet wird, das innerhalb der Kühleinrichtung (3) des geschlossenen Kreislaufs (C) zirkuliert, und wobei sich das zweite Kältemittel von dem Kältemittel unterscheidet.

8. Vorrichtung nach Anspruch 7, **dadurch gekennzeichnet, dass** das zweite Kältemittel R404A, R449A, oder R452A oder ein anderes Kältemittel mit ähnlichen thermodynamischen Eigenschaften umfasst.

9. Umgebungsgesteuerte Prüfkammer (20) mit einem isolierten Raum (21), in den eine zu prüfende Probe (22) eingelegt wird, und umfassend eine Kühlvorrichtung (1) nach einem oder mehreren der Ansprüche 6 bis 8.

## Revendications

1. Réfrigérant pour un dispositif de réfrigération (10) comprenant un mélange de gaz, ledit mélange de gaz comprenant au moins du dioxyde de carbone, du 1,1,1,2-tétrafluoroéthane et du difluorométhane, dans lequel le dioxyde de carbone a un pourcentage massique supérieur à 50 % par rapport au mélange total, **caractérisé en ce que** le dioxyde de carbone a un pourcentage massique compris entre 50 % et 75 % du mélange.

2. Réfrigérant selon la revendication 1, **caractérisé en ce que** le dioxyde de carbone a un pourcentage massique compris entre 67% et 70% par rapport au mélange total, de préférence 69%.

3. Réfrigérant selon la revendication 1 ou 2, **caractérisé en ce que** le 1,1,1,2-tétrafluoroéthane a un pourcentage massique compris entre 12,5% et 22% par rapport au mélange total, de préférence 19%.

4. Réfrigérant selon une ou plusieurs des revendications 1 à 3, **caractérisé en ce que** le difluorométhane a un pourcentage massique compris entre 9 % et 19 % du mélange total, de préférence 12 %.

5. Réfrigérant selon une ou plusieurs des revendications 1 à 4, **caractérisé en ce que** le pourcentage massique de dioxyde de carbone, de 1,1,1,2-tétrafluoroéthane et de difluorométhane est tel qu'il rend ledit mélange ininflammable.

6. Appareil de réfrigération (1) équipé d'un dispositif de réfrigération (10) ayant un circuit fermé (C) dans lequel circule un réfrigérant, ledit circuit fermé (C) étant équipé d'au moins un compresseur (2), de moyen de refroidissement (3) pour ledit réfrigérant, de moyen d'expansion (4) pour ledit réfrigérant et d'au moins un évaporateur (5), **caractérisé en ce qu'**un réfrigérant selon l'une ou plusieurs des revendications 1 à 5 circule dans ledit circuit fermé (C).

7. Appareil (1) selon la revendication 6, **caractérisé en ce qu'**il comprend un second dispositif de réfrigération (15) ayant un second circuit fermé (C1) dans lequel circule un second réfrigérant, ledit second circuit fermé (C1) étant équipé d'au moins un second compresseur (21), de second moyen de refroidissement (31) pour ledit second réfrigérant, de second moyen d'expansion (41) pour ledit second réfrigérant et d'au moins un second évaporateur (51), dans lequel ledit au moins un second évaporateur est utilisé pour refroidir le réfrigérant circulant dans ledit moyen de refroidissement (3) dudit circuit fermé (C), et dans lequel ledit second réfrigérant est distinct dudit réfrigérant.

8. Appareil selon la revendication 7, **caractérisé en ce que** ledit second réfrigérant comprend le R404A, ou le R449A, ou le R452A, ou un autre réfrigérant ayant des propriétés thermodynamiques similaires.

9. Chambre d'essai à environnement contrôlé (20) ayant un espace isolé (21) dans lequel est inséré un échantillon (22) à tester et comprenant un appareil de réfrigération (1) selon l'une ou plusieurs des revendications 6 à 8.
